# EUROPEAN PATENT APPLICATION

(11) **EP 4 186 747 A1**
(43) Date of publication of application: **31.05.2023**
(21) Application number: 22209961.6
(22) Date of filing: 28.11.2022
(51) Int. Cl.: B60L 58/27, B60L 15/02, H02P 21/32, H02P 6/16, H01M 10/615, H01M 10/625, H01M 10/63, H01M 10/637

(54) **METHOD OF CONTROLLING POSITION OF MOTOR ROTOR FOR POWER BATTERY DURING PULSE HEATING**

(30) Priority: 30.11.2021 CN 202111451994
(71) Applicant: Chongqing Changan New Energy Vehicles Technology Co., Ltd, Chongqing 401133 (CN)
(72) Inventor: ZHANG, Zheng, Chongqing, 401133 (CN); LIN, Yuting, Chongqing, 401133 (CN); CHEN, Yang, Chongqing, 401133 (CN); CHEN, Jian, Chongqing, 401133 (CN); LIU, Li, Chongqing, 401133 (CN); SU, Linke, Chongqing, 401133 (CN)
(74) Representative: 2K Patentanwälte Blasberg Kewitz & Reichel

(57) **Abstract**

The disclosure provides a method (100A) of controlling a position of a motor rotor for power battery during pulse heating. It enables the position of the motor rotor to converge within an allowable position range of pulse heating as a goal orientation, and performs a PI control. If the PI control fails, a security mechanism will be activated. Finally, there are two states, one is that the position of the motor rotor converges within the allowable position range of the pulse heating, and the other is that the pulse heating function is exited and a fault is reported. In this way, a frequent start and stop of pulse heating may be prevented from affecting a duration life of the motor and the power battery, which ensures a safety of a vehicle.

## Description

### TECHNICAL FIELD

The disclosure belongs to the technical field of a power battery heating, particularly to a method of controlling a position of a motor rotor for a power battery during pulse heating.

### BACKGROUND

With the rapid development of the new energy vehicle industry, the development of power batteries has been highly valued by major manufacturers. Nowadays, most of the power batteries use lithium batteries, and the charging and discharging capacity of the power battery is limited at a low temperature, so the power battery needs to be heated. As a new technology for battery heating today, pulse heating does not need to use a heating film, which reduces the cost and avoids continuous charging and discharging during the heating process and is beneficial to the duration life of the battery. At the same time, the current is large during the pulse heating process, the battery heating rate may reach 3 to 4 times that of the conventional mode, and the battery is in a high-frequency charging and discharging process, so the power consumption is low.

During the pulse heating process of the power battery, the IGBT switch is in a 1-cycle PWM control and 1-cycle off state. When in the PWM control, the high-voltage loop generates pulse current, and the power battery charges the motor inductance. When it is in the off state, the motor inductance discharges and enters the heating state at this time. In the PWM control process, in an ideal condition, there is no quadrature axis current I_{q} (which means that I_{q} =0) output, and only the direct axis current I_{d} exists in the current output of the entire heating process. In an actual state, due to the existence of systematic errors such as the acquisition precision of the resolver and the acquisition accuracy of the three-phase current sensor, an unexpected current component will be generated on the Q axis, which means the unexpected quadrature axis current I_{q}. The existence of the unexpected quadrature axis current I_{q} produces a driving torque that causes a position offset of the motor rotor in a clockwise or a counterclockwise or an alternating direction. However, the magnitude of the position offset of the motor rotor depends on the angle formed by the actual direction of the direct-axis current I_{d} and the D-axis.

During the pulse heating process of the power battery, the influence of the position offset of the motor rotor is negative. And a sufficient condition for pulse heating to work is that the position of the motor rotor needs to be maintained within a limited position range (which means the position range allowed by pulse heating). If the position offset of the motor rotor exceeds the limited position range, the pulse heating process will be exited. At this time, the pulse heating current will no longer be output, and the trend of the position offset of the motor rotor will be weakened. If the position offset of the motor rotor returns to within the limited position range, the pulse heating process will restart at this time. A frequent start and stop of pulse heating will affect the duration life of the motor and the power battery, which will affect the safety of the vehicle.

### SUMMARY

The disclosure provides a method of controlling a position of a motor rotor for a battery power during pulse heating, in order to avoid affecting a duration life of a motor and the power battery, which avoids affecting a safety of a vehicle.

The method including S1: setting a PI control action frequency to be consistent with an IGBT switching frequency determined by pulse heating, when the IGBT is in an off period, enabling the PI control, when the IGBT is in an on period, not enabling the PI control, and then executing S2;
S2: when the pulse heating starts, obtaining an initial position of the motor rotor, and setting the initial position of the motor rotor as a PI control adjustment target value, and then executing S3;
S3: during the pulse heating, obtaining a current position of the motor rotor, calculating a position offset of the motor rotor according to the current position of the motor rotor and the initial position of the motor rotor, and then executing S4;
S4: when enabling the PI control, inputting the position offset of the motor rotor into a PI control module for PI control, and then after limited by the limiter module, obtaining a target value of the quadrature axis voltage U_{q}, and then executing S5;
S5: transforming the target value of a quadrature-axis voltage U_{q} and a target value of a direct-axis voltage U_{d} determined by the pulse heating into an α-axis voltage vector U_{α} and a β-axis voltage vector U_{β}, and then executing S6;
S6: inputting the α-axis voltage vector U_{α}, β-axis voltage vector U_{β} and the IGBT switching frequency determined by the pulse heating into an SVPWM module, the SVPWM module calculating a duty cycle of a three-phase voltage, and then executing S7;
S7: when not enabling the PI control, the SVPWM module outputting a duty cycle of the three-phase voltage, controlling a motor to work, and then executing S8;
S8: transforming a three-phase current of the motor into a direct-axis current I_{d} and a quadrature-axis current I_{q}, the direct-axis current I_{d} and the quadrature-axis current I_{q} q acting on the motor, and the quadrature-axis current I_{q} adjusting the position of the motor rotor, and then executing S9;
S9: determining whether the position offset of the motor rotor is greater than a preset first offset threshold, if so, executing S12, otherwise executing S10;
S10: determining whether the position offset of the motor rotor is greater than a preset second offset threshold and less than or equal to the preset first offset threshold, if so, returning to S3, otherwise executing S11;
S11: determining that the position of the motor rotor converges within an allowable position range of the pulse heating, exiting the PI control, keeping a target value of the subsequent quadrature axis voltage U_{q} as the target value of the quadrature axis voltage U_{q} determined in a previous cycle, and then end;
S12: starting a security mechanism.

There are three security mechanisms.

Operations to start a first security mechanism include:
first operation: reducing the duty cycle of the three-phase voltage according to a preset first gradient, and then executing a second operation;
second operation: determining whether the position offset of the motor rotor is less than or equal to the preset second offset threshold, if so, executing a third operation, otherwise executing a fourth operation;
third operation: determining that the position of the motor rotor converges within the allowable position range of the pulse heating, keeping a duty cycle of a subsequent three-phase voltage being always the duty cycle of the three-phase voltage determined in the previous cycle, and then ends;
fourth operation: determining whether the duty cycle of the three-phase voltage is greater than a preset duty cycle threshold, if so, returning to the first operation, otherwise executing fifth operation;
fifth operation: exiting a pulse heating function and reporting a fault, then end.

Operations to start a second security mechanism include:
first operation: increasing the IGBT switching frequency according to a preset second gradient, and then executing a second operation;
second operation: determining whether the position offset of the motor rotor is less than or equal to the preset second offset threshold, if so, executing a third operation, otherwise executing a fourth operation;
third operation: determining that the position of the motor rotor converges within the allowable position range of the pulse heating, keeping a subsequent IGBT switching frequency being always the IGBT switching frequency determined in the previous cycle, and then ends;
fourth operation: determining whether the IGBT switching frequency is less than a preset switching frequency threshold, if so, returning to the first operation, otherwise, executing the fifth operation;
fifth operation: exiting a pulse heating function and reporting a fault, then end.

Operations to start a third security mechanism include:
first operation: reducing the duty cycle of the three-phase voltage according to a preset first gradient, increasing the IGBT switching frequency according to a preset second gradient, and then executing a second operation;
second operation: determining whether the position offset of the motor rotor is less than or equal to the preset second offset threshold, if so, executing a third operation, otherwise executing a fourth operation;
third operation: determining that the position of the motor rotor converges within the allowable position range of the pulse heating, keeping the duty cycle of a subsequent three-phase voltage being always the duty cycle of the three-phase voltage determined in the previous cycle, and keeping a subsequent IGBT switching frequency being always the previous cycle determined in the previous cycle, then end;
fourth operation: determining whether the duty cycle of the three-phase voltage is greater than a preset duty cycle threshold and the IGBT switching frequency is less than a preset switching frequency threshold, if so, returning to the first operation, otherwise, executing a fifth operation;
fifth operation: exiting a pulse heating function and reporting a fault, then end.

The method enables the position of the motor rotor to converge within the allowable position range of pulse heating as the goal orientation, and performs a PI control. If the PI control fails, the security mechanism will be activated. Finally, there are two states. One is that the position of the motor rotor converges within the allowable position range of the pulse heating, and the other is that the pulse heating function is exited and a fault is reported. In this way, a frequent start and stop of pulse heating may be prevented from affecting a duration life of the motor and the power battery, which ensures a safety of a vehicle.

### BRIEF DESCRIPTION OF THE DRAWINGS

FIG. 1 is a schematic flow chart of controlling the position of the motor rotor in a first embodiment.
FIG. 2 is a schematic flow chart of controlling the position of the motor rotor in a second embodiment.
FIG. 3 is a schematic flow chart of controlling the position of the motor rotor in a third embodiment.

### DETAILED DESCRIPTION

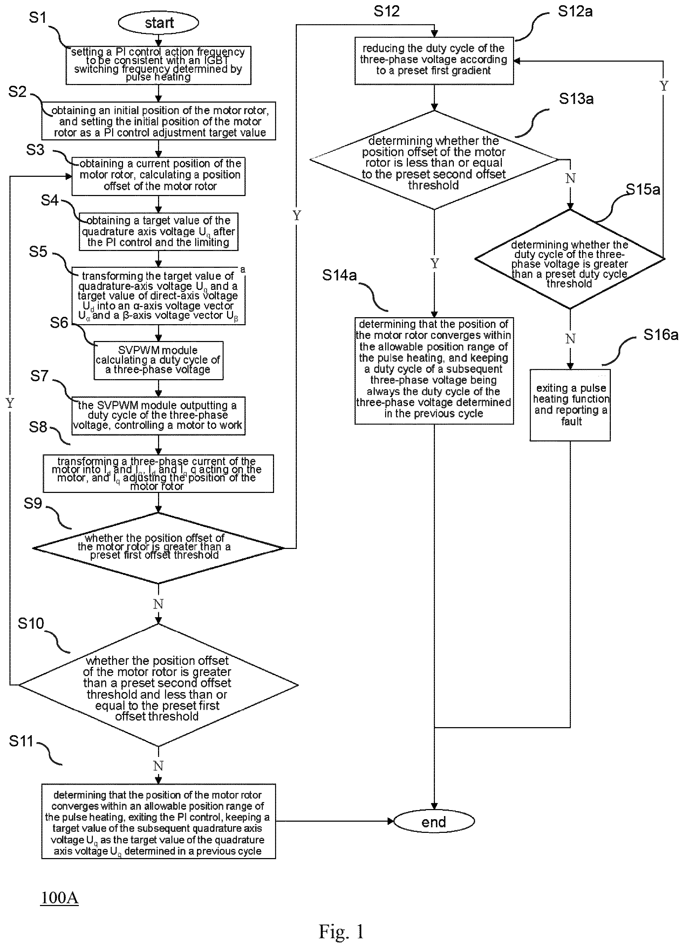

First embodiment: Please refer to FIG. 1. A method 100A of a controlling a position of a motor rotor for power battery during pulse heating includes the following steps/operations:
S1: setting a PI control action frequency to be consistent with an IGBT switching frequency determined by pulse heating, when the IGBT is in an off period, enabling the PI control, when the IGBT is in an on period, not enabling the PI control, and then executing S2;
S2: when the pulse heating starts, obtaining an initial position of the motor rotor, and setting the initial position of the motor rotor as a PI control adjustment target value, and then executing S3;
S3: during the pulse heating, obtaining a current position of the motor rotor, calculating a position offset of the motor rotor according to the current position of the motor rotor and the initial position of the motor rotor (which means taking an absolute value of a difference between the current position of the motor rotor and the initial position of the motor rotor), and then executing S4;
S4: when enabling the PI control, inputting the position offset of the motor rotor into a PI control module for PI control, and then after limited by the limiter module, obtaining a target value of the quadrature axis voltage U_{q}, and then executing S5;
S5: transforming the target value of a quadrature-axis voltage U_{q} and a target value of a direct-axis voltage U_{d} determined by the pulse heating into α-axis voltage vector U_{α} and β-axis voltage vector U_{β} through a PARK inverse transformation, and then executing S6;
S6: inputting the α-axis voltage vector U_{α}, β-axis voltage vector U_{β} and the IGBT switching frequency determined by the pulse heating into an SVPWM module, the SVPWM module calculating a duty cycle of a three-phase voltage, and then executing S7;
S7: when not enabling the PI control, the SVPWM module outputting a calculated duty cycle of the three-phase voltage, controlling a motor to work, and then executing S8;
S8: transforming a three-phase current of the motor into a direct-axis current I_{d} and a quadrature-axis current I_{q} (which means performing a CLARK transformation first to transform the three-phase current of the motor into I_{α} and I_{β}, then performing the PARK transformation to transform I_{α} and I_{β} are transformed into direct-axis current I_{d} and quadrature-axis current I_{q}), the direct-axis current I_{d} and the quadrature-axis current I_{q} acting on the motor, and the quadrature-axis current I_{q} adjusting the position of the motor rotor, and then executing S9;
S9: determining whether the position offset of the motor rotor is greater than a preset first offset threshold, if so, executing S12, otherwise executing S10;
S10: determining whether the position offset of the motor rotor is greater than a preset second offset threshold and less than or equal to the preset first offset threshold, if so, returning to S3, otherwise executing S11, wherein the preset second offset threshold is smaller than the preset first offset threshold;
S11: determining that the position of the motor rotor converges within an allowable position range of the pulse heating, exiting the PI control, keeping a target value of the subsequent quadrature axis voltage U_{q} as the target value of the quadrature axis voltage U_{q} determined in a previous cycle, and then end; then a security mechanism S12 is started, comprising the steps/operations:
S12a: reducing the duty cycle of the three-phase voltage according to a preset first gradient, and then executing S13a;
S13a: determining whether the position offset of the motor rotor is less than or equal to the preset second offset threshold, if so, executing S14a, otherwise executing S15;
S14a: determining that the position of the motor rotor converges within the allowable position range of the pulse heating, keeping a duty cycle of a subsequent three-phase voltage being always the duty cycle of the three-phase voltage determined in the previous cycle, and then ends;
S15a: determining whether the duty cycle of the three-phase voltage is greater than a preset duty cycle threshold, if so, returning to S12a, otherwise executing S16a;
S16a: exiting a pulse heating function and reporting a fault, then end.

In this embodiment, after the PI control fails, the duty cycle of the three-phase voltage is reduced as the security mechanism, so that an amplitude of the unexpected Iq is reduced, which weakens a tendency of the position offset of the motor rotor and enables the position of the motor rotor to converge within the allowable position range of the pulse heating.

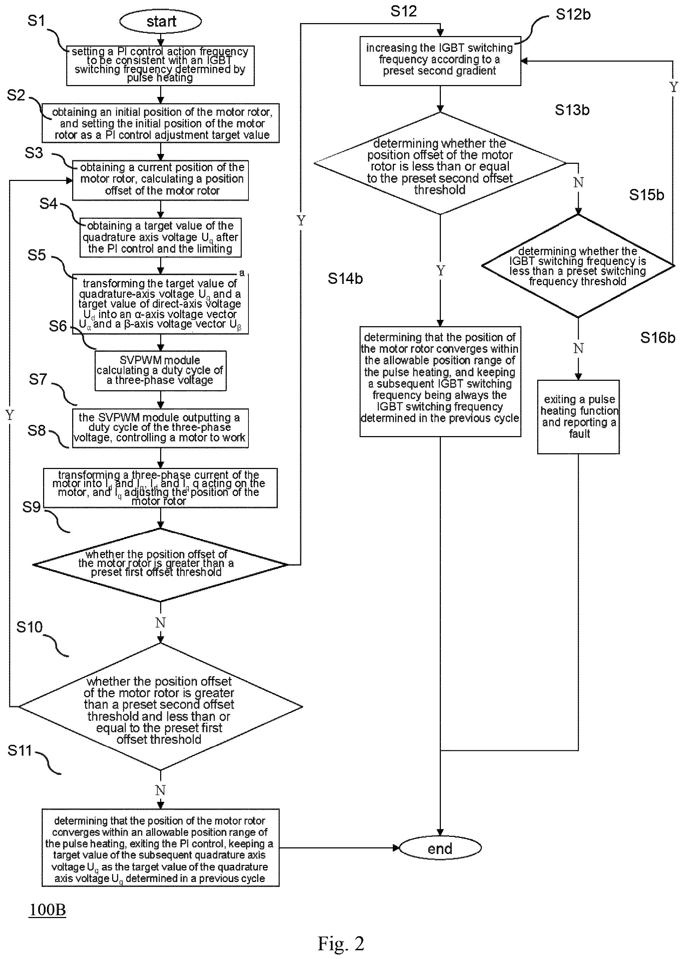

Second embodiment: please refer to FIG. 2, most operations of the controlling method 100B of the position of the motor rotor for power battery during the pulse heating in this embodiment are the same as those in the first embodiment, the differences lie in the steps/operations S12b to S16b of the security mechanism S12, including:
S12b: increasing the IGBT switching frequency according to a preset second gradient, and then executing S13b;
S13b: determining whether the position offset of the motor rotor is less than or equal to the preset second offset threshold, if so, executing S14b, otherwise executing S15;
S14b: determining that the position of the motor rotor converges within the allowable position range of the pulse heating, keeping a subsequent IGBT switching frequency being always the IGBT switching frequency determined in the previous cycle, and then ends;
S15b: determining whether the IGBT switching frequency is less than a preset switching frequency threshold, if so, returning to S12b, otherwise, executing S16b;
S16b: exiting a pulse heating function and reporting a fault, then end.

In this embodiment, after the PI control fails, the switching frequency of the IGBT is increased as the security mechanism, so that an action time of an unexpected torque may be shortened, which weakens a tendency of the position offset of the motor rotor and enables the position of the motor rotor to converge within the allowable position range of the pulse heating.

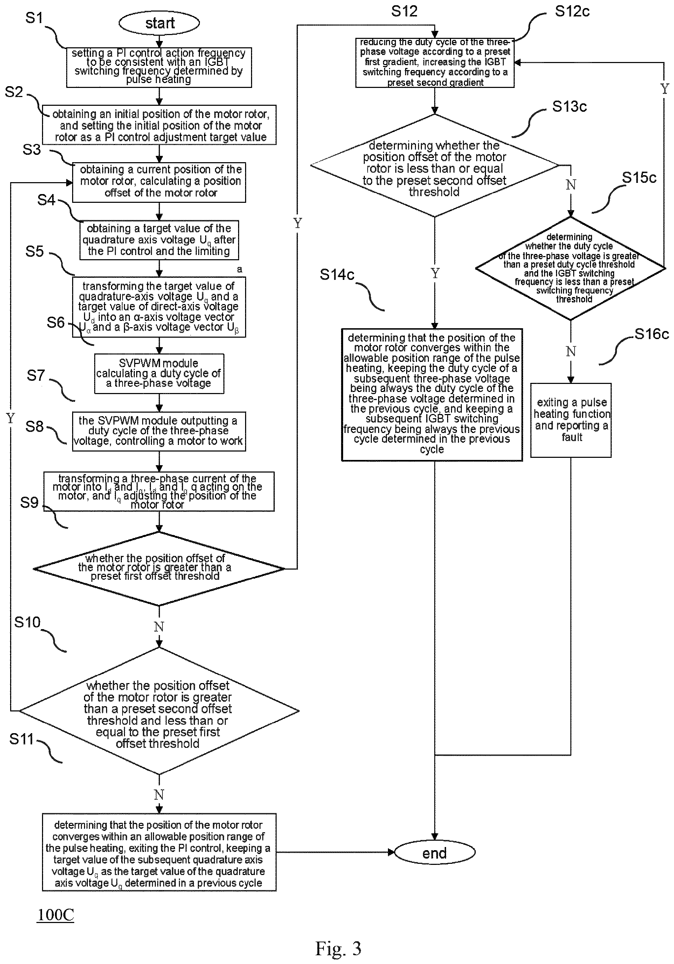

Third embodiment, please refer to FIG. 3. most operations of the controlling method 100C of the position of the motor rotor for power battery during the pulse heating in this embodiment are the same as those in the first embodiment, the differences lie in the steps/operations S12c to S16c, S12b of the security mechanism S12, including:
S12c: reducing the duty cycle of the three-phase voltage according to a preset first gradient, increasing the IGBT switching frequency according to a preset second gradient, and then executing S13c;
S13c: determining whether the position offset of the motor rotor is less than or equal to the preset second offset threshold, if so, executing S14c, otherwise executing S15c;
S14c: determining that the position of the motor rotor converges within the allowable position range of the pulse heating, keeping the duty cycle of a subsequent three-phase voltage being always the duty cycle of the three-phase voltage determined in the previous cycle, and keeping a subsequent IGBT switching frequency being always the previous cycle determined in the previous cycle, then end;
S15c: determining whether the duty cycle of the three-phase voltage is greater than a preset duty cycle threshold and the IGBT switching frequency is less than a preset switching frequency threshold, if so, returning to S12c, otherwise, executing S16c;
S16c: exiting a pulse heating function and reporting a fault, then end.

In this embodiment, after the PI control fails, the duty cycle of the three-phase voltage is reduced and the switching frequency of the IGBT is increased as the security mechanism, so that the amplitude of the unexpected Iq may be reduced and an action time of the unexpected torque may be shortened, which weakens a tendency of the position offset of the motor rotor and enables the position of the motor rotor to converge within the allowable position range of the pulse heating.

In summary, the disclosure provides a method, with exemplified embodiments 100A-100C thereof, of controlling a position of a motor rotor for power battery during pulse heating. It enables the position of the motor rotor to converge within an allowable position range of pulse heating as a goal orientation, and performs a PI control. If the PI control fails, a security mechanism will be activated. Finally, there are two states, one is that the position of the motor rotor converges within the allowable position range of the pulse heating, and the other is that the pulse heating function is exited and a fault is reported. In this way, a frequent start and stop of pulse heating may be prevented from affecting a duration life of the motor and the power battery, which ensures a safety of a vehicle.

## Claims

1. A method (100A; 100B; 100C) of controlling a position of a motor rotor for a power battery during pulse heating, comprising:
S1: setting a PI control action frequency to be consistent with an IGBT switching frequency determined by pulse heating, when the IGBT is in an off period, enabling the PI control, when the IGBT is in an on period, not enabling the PI control, and then executing S2;
S2: when the pulse heating starts, obtaining an initial position of the motor rotor, and setting the initial position of the motor rotor as a PI control adjustment target value, and then executing S3;
S3: during the pulse heating, obtaining a current position of the motor rotor, calculating a position offset of the motor rotor according to the current position of the motor rotor and the initial position of the motor rotor, and then executing S4;
S4: when enabling the PI control, inputting the position offset of the motor rotor into a PI control module for PI control, and then after limited by the limiter module, obtaining a target value of a quadrature axis voltage U_{q}, and then executing S5;
S5: transforming the target value of the quadrature-axis voltage U_{q} and a target value of a direct-axis voltage U_{d} determined by the pulse heating into an α-axis voltage vector U_{α} and a β-axis voltage vector U_{β}, and then executing S6;
S6: inputting the α-axis voltage vector U_{α}, β-axis voltage vector U_{β} and the IGBT switching frequency determined by the pulse heating into an SVPWM module, the SVPWM module calculating a duty cycle of a three-phase voltage, and then executing S7;
S7: when not enabling the PI control, the SVPWM module outputting the duty cycle of the three-phase voltage, controlling a motor to work, and then executing S8;
S8: transforming a three-phase current of the motor into a direct-axis current I_{d} and a quadrature-axis current I_{q}, the direct-axis current I_{d} and the quadrature-axis current I_{q} acting on the motor, and the quadrature-axis current I_{q} adjusting the position of the motor rotor, and then executing S9;
S9: determining whether the position offset of the motor rotor is greater than a preset first offset threshold, if so, executing S12, otherwise executing S10;
S10: determining whether the position offset of the motor rotor is greater than a preset second offset threshold and less than or equal to the preset first offset threshold, if so, returning to S3, otherwise executing S11;
S11: determining that the position of the motor rotor converges within an allowable position range of the pulse heating, exiting the PI control, keeping a target value of a subsequent quadrature axis voltage U_{q} as the target value of the quadrature axis voltage U_{q} determined in a previous cycle, and then end;
S12: starting a security mechanism.

2. The method (100A) of controlling the position of the motor rotor for the power battery during pulse heating according to claim 1, wherein
starting the security mechanism in the S12 comprises:
S12a: first operation: reducing the duty cycle of the three-phase voltage according to a preset first gradient, and then executing a second operation 13a;
S13a: second operation: determining whether the position offset of the motor rotor is less than or equal to the preset second offset threshold, if so, executing a third operation S14a, otherwise executing a fourth operation S15a;
S14a: third operation: determining that the position of the motor rotor converges within the allowable position range of the pulse heating, keeping a duty cycle of a subsequent three-phase voltage as the duty cycle of the three-phase voltage determined in the previous cycle, and then ends;
S15a: fourth operation: determining whether the duty cycle of the three-phase voltage is greater than a preset duty cycle threshold, if so, returning to the first operation S12a, otherwise executing fifth operation S16a;
S16a fifth operation: exiting a pulse heating function and reporting a fault, then end.

3. The method (100B) of controlling the position of the motor rotor for the power battery during pulse heating according to claim 1, wherein
starting the security mechanism in the S12 comprises:
S12b: first operation: increasing the IGBT switching frequency according to a preset second gradient, and then executing a second operation S13b;
S13b: second operation: determining whether the position offset of the motor rotor is less than or equal to the preset second offset threshold, if so, executing a third operation S14b, otherwise executing a fourth operation S15b;
S14b: third operation: determining that the position of the motor rotor converges within the allowable position range of the pulse heating, keeping a subsequent IGBT switching frequency as the IGBT switching frequency determined in the previous cycle, and then ends;
S15b: fourth operation: determining whether the IGBT switching frequency is less than a preset switching frequency threshold, if so, returning to the first operation S12b, otherwise, executing the fifth operation S16b;
S16b: fifth operation: exiting a pulse heating function and reporting a fault, then end.

4. The method (100C) of controlling the position of the motor rotor for the power battery during pulse heating according to claim 1, wherein
starting the security mechanism in the S12 comprises:
S12c: first operation: reducing the duty cycle of the three-phase voltage according to a preset first gradient, increasing the IGBT switching frequency according to a preset second gradient, and then executing a second operation;
S13c: second operation: determining whether the position offset of the motor rotor is less than or equal to a preset second offset threshold, if so, executing a third operation S14c, otherwise executing a fourth operation S15c;
S14c: third operation: determining that the position of the motor rotor converges within the allowable position range of the pulse heating, keeping the duty cycle of a subsequent three-phase voltage as the duty cycle of the three-phase voltage determined in the previous cycle, and keeping a subsequent IGBT switching frequency as the previous cycle determined in the previous cycle, then end;
S15c: fourth operation: determining whether the duty cycle of the three-phase voltage is greater than a preset duty cycle threshold and the IGBT switching frequency is less than a preset switching frequency threshold, if so, returning to the first operation S12c, otherwise, executing a fifth operation S16c;
S16c: fifth operation: exiting a pulse heating function and reporting a fault, then end.
